(19) Europäisches Patentamt
European Patent Office
Office européen des brevets

(11) **EP 0 706 924 B1**

(12) **EUROPÄISCHE PATENTSCHRIFT**

(45) Veröffentlichungstag und Bekanntmachung des Hinweises auf die Patenterteilung:
**17.06.1998 Patentblatt 1998/25**

(51) Int. Cl.$^6$: **B60T 13/72**

(21) Anmeldenummer: **95114883.2**

(22) Anmeldetag: **21.09.1995**

(54) **Elektronisch gesteuerter Bremskraftverstärker und Verfahren zu dessen Betrieb**

Electronically controlled brake booster and method for operating it

Servo-moteur de freinage contrôlé électroniquement et procédé de fonctionnement

(84) Benannte Vertragsstaaten:
**DE ES FR GB IT**

(30) Priorität: **11.10.1994 DE 4436297**

(43) Veröffentlichungstag der Anmeldung:
**17.04.1996 Patentblatt 1996/16**

(73) Patentinhaber:
**LUCAS INDUSTRIES PUBLIC LIMITED COMPANY**
**Solihull, West Midlands B91 3TX (GB)**

(72) Erfinder: **Michels, Erwin**
**D-56829 Kail (DE)**

(74) Vertreter:
**Schmidt, Steffen J., Dipl.-Ing. et al**
**Wuesthoff & Wuesthoff,**
**Patent- und Rechtsanwälte,**
**Schweigerstrasse 2**
**81541 München (DE)**

(56) Entgegenhaltungen:
EP-A- 0 343 365          EP-A- 0 616 932
DE-A- 4 324 205

## Beschreibung

Die vorliegende Erfindung betrifft einen elektronisch gesteuerten Bremskraftverstärker für eine Straßenfahrzeugbremsanlage, mit einem Gehäuse, das eine Unterdruckkammer und eine von der Unterdruckkammer durch eine bewegliche Wand getrennte Arbeitskammer aufweist, einer elektromagnetisch betätigbaren Steuerventilanordnung, die mit der beweglichen Wand zu gemeinsamer Relativbewegung gegenüber dem Gehäuse verbunden ist, und einem Sensor, der für eine elektronische Steuereinrichtung Betriebszustände der Straßenfahrzeugbremsanlage erfaßt und für diese Betriebszustände charakteristische Signale erzeugt, die die Steuereinrichtung zur Erzeugung von Ansteuersignalen für die Steuerventilanordnung auswertet.

Eine derartige Anordnung ist aus der DE 40 28 290 C1 bekannt, bei der die durch den Fahrer veranlaßte Betätigungsgeschwindigkeit des Bremspedals in dessen jeweiliger Stellung als einziges Kriterium zur Auslösung eines automatischen Bremsvorgangs herangezogen wird. Bei der dort beschriebenen Anordnung wird ein Vergleich der durch den Fahrer veranlaßten Betätigungsgeschwindigkeit des Bremspedals in dessen jeweiliger Stellung mit einem unveränderlichen Schwellwert ausgeführt und in Abhängigkeit von dem Vergleichsergebnis die Notbremsung veranlaßt oder nicht.

Aus der DE 41 02 496 A1 ist eine Bremsdruck-Steuereinrichtung bekannt, die die auf das Bremspedal ausgeübte Kraft oder als damit direkt korrelierte Größe den im hydraulischen Bremskreis erzeugten Bremsdruck zu messen, um bei Überschreiten eines Schwellenwertes den Bremskreis zu sperren, in dem der erhöhte Bremsdruck gemessen wurde.

Außerdem bedeutet die Auslösung der Notbremsung, daß die Hauptbremsleitungen gegen den Hauptbremszylinder abgesperrt werden müssen und die Radbremsen ventilgesteuert mit dem Ausgangsdruck einer Hilfsdruckquelle beaufschlagt werden. Dies hat zur Folge, daß keine Verbindung mehr zwischen der Hydraulikseite der Bremsanlage und den Radbremsen mehr besteht, so daß das Bremspedal "hart" geworden ist und eine wegabhängige Steuerung des automatischen Bremsvorganges nicht mehr möglich ist, falls nicht zusätzlichen Puffervolumina vorgesehen sind, die bei gegen den Hauptbremszylinder gesperrten Radbremsen durch die Pedalbetätigung des Fahrers verdrängt werden können. Nur so wäre eine Pedalwegsimulation möglich, aus deren Zeitverlauf auch wieder ein Fahrerwunsch hinsichtlich der erwarteten Fahrzeugverzögerung erkennbar und bei der weiteren Bremsung berücksichtigbar wäre.

Darüber hinaus ist diese Vorgehensweise insoweit nachteilig, als systemimmanente Totzeiten, die Steifigkeit des Hydrauliksystems, des Bremskraftverstärkers und das mechanische Spiel der Bremspedalmechanik insbesondere am Anfang des Pedalbetätigungsweges zu Betätigungsgeschwindigkeiten des Bremspedals führen, die einen vom Fahrer nicht gewollten automatischen Bremsvorgang auslösen, da die jeweilige Schwelle erreicht bzw. kurzfristig überschritten wird.

Das heißt, daß bei einer Bremsanlage mit geringer Steifigkeit die vorgegebene Schwelle zu früh erreicht wird, während bei einer Bremsanlage mit zu hoher Steifigkeit die vorgegebene Schwelle zu spät erreicht wird. Da die Steifigkeit der Bremsanlage sich auch während des Fahrens und der Lebensdauer eines Fahrzeuges ändern kann, ist ein sicherer Betrieb der Bremsanlage nicht in jedem Fall gewährleistet.

Der Erfindung liegt daher das Problem zugrunde, einen elektronisch gesteuerten Bremskraftverstärker für eine Straßenfahrzeugbremsanlage der eingangs genannten Art dahingehend weiterzubilden, daß der Einfluß der systemimmanenten Totzeiten und der Steifigkeit des Hydrauliksystems bzw. des Bremskraftverstärkers und das mechanische Spiel der Bremspedalmechanik möglichst gering sind.

Zu Lösung dieses Problems ist der Sensor als Drucksensor ausgestaltet und erfaßt zumindest den in der Arbeitskammer herrschenden Druck.

Der Erfindung liegt die überraschende Erkenntnis zugrunde, daß der Druck in der Arbeitskammer von der Steifigkeit der Bremsanlage unabhängig ist, da die Änderung des Drucks nur durch eine Relativbewegung der von dem Bremspedal verschobenen Betätigungsstange zu dem Gehäuse der Steuerventilanordnung eingeleitet wird. Diese Bewegung ist jedoch über wesentliche Abschnitte der Bremspedalbetätigung, insbesondere am Anfang das Betätigungsweges, nicht korreliert mit der axialen Relativbewegung der Steuerventilanordnung zu dem Gehäuse des Bremskraftverstärkers, was sich aus folgenden Überlegungen ergibt:

Da am Anfang einer Pedalbetätigung in erster Linie mechanische Leerwege überwunden werden, treten hier relativ hohe Pedalbetätigungsgeschwindigkeiten auf, die sich jedoch noch nicht in einer Öffnung der Steuerventilanordnung und damit einer Verschiebung der beweglichen Wand durch die Steuerventilanordnung niedergeschlagen haben.

Während bei der Anordnung gemäß der DE 40 28 290 C1 der Weg der Bremspedal-Betätigungsstange gegen das Fahrzeugchassis erfaßt und in ein Bremspedal-Betätigungsgeschwindigkeits-Signal verändert wird, wird bei der Erfindung die vom Fahrer in das Bremspedal eingeleitete Energie als zu dem Arbeitskammerdruck proportionale Größe erfaßt.

Eine langsame Betätigung des Bremspedals (mit ansteigender Kraft) für einen längeren Zeitraum kann den gleichen Arbeitskammerdruck hervorrufen, wie eine schnelle Betätigung des Bremspedals für einen kürzeren Zeitraum. Dies liegt daran, daß bei der Betätigung des Bremspedals das Steuerventil geöffnet wird, so daß in die Arbeitskammer Luft einströmt und eine Verschiebung der beweglichen Wand bewirkt. Ob dabei das Steuerventil für kurze Zeit weit geöffnet wird, oder für längere Zeit nur geringfügig, ist für das einströmende Luftvolumen unerheblich. Die Verschiebung des Membrantellers bei der Vergrößerung des Arbeitskammervolumens erfolgt gegen die im Bremssystem vorhandenen Gegenkräfte (Rückstellfedern im Bremskraftverstärker, Bremsen, etc.). Diese Gegenkräfte steigen jedoch bei wachsender Pedalbetätigung an. Daher ist bei der Erfindung durch den in der Arbeitskammer gemessenen Druck die eingeleitete Arbeit (auf das Bremspedal ausgeübte Kraft integriert über den Verschiebungsweg verknüpft mit dem Verstärkungsfaktor des Bremskraftverstärkers) unter Verwendung des Drucksensors auswertbar.

Vorteilhafte Ausgestaltungen des erfindungsgemäßen Bremskraftverstärkers sind Gegenstand der abhängigen Vorrichtungsansprüche.

Der Drucksensor kann an oder in einer ortsfesten Wand des Gehäuses angeordnet sein, oder an oder in der beweglichen Wand angeordnet sein.

Gemäß einer bevorzugten Ausführungsform der Erfindung erfaßt der Drucksensor nicht nur den in der Arbeitskammer herrschenden absoluten Druck sondern die Druckdifferenz zwischen dem in der Unterdruckkammer herrschenden Druck und dem in der Arbeitskammer herrschenden Druck und erzeugt ein für diese Druckdifferenz charakteristisches Signal für die Steuereinrichtung.

Gemäß einer anderen, ebenfalls bevorzugten Ausführungsform der Erfindung erfaßt der Drucksensor die Druckdifferenz zwischen dem in der Umgebungsatmosphäre des Bremskraftverstärkers herrschenden Druck und dem in der Arbeitskammer herrschenden Druck und erzeugt ein für diese Druckdifferenz charakteristisches Signal für die Steuereinrichtung.

Durch die Differenzdruckmessung ist das erzeugte Signal unabhängig von Umgebungsdruckschwankungen, was die weitere Verarbeitung vereinfacht.

Anstelle eines Differenzdrucksensors kann auch ein zweiter Drucksensor außerhalb des Gehäuses oder in der Unterdruckkammer angeordnet sein, der den in der Umgebungsatmosphäre des Bremskraftverstärkers herrschenden Druck bzw. den in der Unterdruckkammer herrschenden Druck erfaßt und ein für diesen Druck charakteristisches Signal für die Steuereinrichtung erzeugt.

In diesem Fall werden sowohl das Signal mit dem Druck in der Arbeitskammer als auch das Signal mit dem Druck der Umgebung oder der Unterdruckkammer an die Steuereinrichtung geleitet und dort zur weiteren Verarbeitung und Steuersignalerzeugung ausgewertet.

Die Erfindung betrifft auch ein Verfahren zum Betrieb einer Fahrzeugbremsanlage mit einem elektronisch gesteuerten Bremskraftverstärker mit folgenden Schritten:

a) Erfassen des in der Arbeitskammer des Bremskraftverstärkers herrschenden Druckes,

b) Erzeugen eines für den Druck in der Arbeitskammer charakteristischen Signals, und

c) Auswerten des Signals, um ein Ansteuersignal für eine elektromagnetisch betätigbare Steuerventilanordnung des Bremskraftverstärkers zu erzeugen, und

d) Ausgeben eines Ansteuersignals an die Steuerventilanordnung, das eine Betätigung des Bremskraftverstärkers im Sinne eines Aufbaus oder eines Abbaus eines Bremsdrucks bewirkt.

Damit ist es auf einfache Weise möglich, Not- oder Zielbremsungen auszulösen und Geschwindigkeitsregelungen (Cruise Control) oder Fahrdynamikregelungen (CDC) zu realisieren.

Vorteilhafte Ausgestaltungen des erfindungsgemäßen Verfahrens zum Betrieb einer Fahrzeugbremsanlage mit einem elektronisch gesteuerten Bremskraftverstärker sind Gegenstand der abhängigen Verfahrensansprüche.

Gemäß einer bevorzugten Vorgehensweise umfaßt der Schritt c) folgendes:

c1) Verknüpfen des für den in der Arbeitskammer herrschenden Druck charakteristischen Signals mit einem für den in der Umgebungsatmosphäre des Bremskraftverstärkers herrschenden Druck oder den in einer Unterdruckkammer des Bremskraftverstärkers herrschenden Druck charakteristischen Signals zu einem gemeinsamen Signal.

Um den Geschwindigkeitsverlauf des Drucks in der Arbeitskammer bzw. des Differenzdrucks zwischen Arbeitskammer und Umgebung oder Unterdruckkammer zu erhalten, umfaßt der Schritt c) des weiteren folgendes:

c2) Ableiten des (gemeinsamen) Signals nach der Zeit (differenzieren), um ein Ableitungs-Signal zu erhalten.

Dies kann in der elektronischen Steuereinrichtung ausgeführt werden.

Um eine Notbremsung oder Zielbremsung einzuleiten, umfaßt der Schritt c) des weiteren folgendes:

c3) Vergleichen des Ableitungs-Signals mit einem vorbestimmten Schwellwert.

Sicherheitshalber kann zusätzlich auch der nicht abgeleitete Signalverlauf ausgewertet werden, um bei hohen Druckwerten, die langsam erreicht werden, ebenfalls eine automatische Bremsung auszulösen. Der Schwellwert kann sowohl fest vorgegeben sein, als auch aufgrund von anderen Parametern (z.B. Fahrzeuggeschwindigkeit) aus einem Kennlinienfeld ermittelt werden.

Um die Not- oder Zielbremsung einzuleiten, umfaßt der Schritt c) des weiteren folgendes:

c4) Erzeugen eines ersten Ansteuersignals falls das Ableitungs-Signal größer oder gleich dem momentanen Schwellwert ist, wobei das erste Ansteuersignal so bemessen ist, daß es eine Betätigung des Bremskraftverstärkers bewirkt, die einen anderen, vorzugsweise größeren Bremsdruck hervorruft, als er sich aus der momentanen Stellung eines mit dem Bremskraftverstärker verbundenen Bremspedals ergäbe.

Vorzugsweise wird dabei das erste Ansteuersignal so bemessen, daß es einen maximal möglichen Bremsdruck hervorruft. Die kann ohne Risiko geschehen, da die ABS-Regelung dafür Sorge trägt, daß es nicht zu einer Blockierung der Räder kommt.

Damit der Fahrer die Not- oder Zielbremsung abbrechen kann, umfaßt der Schritt c) des weiteren folgendes:

c5) Erfassen einer Betätigungsstellung des Bremspedals, und
c6) Erzeugen eines eine Rücknahme des Bremspedals um einen vorbestimmten Betätigungsweg wiedergebendes Rücknahmesignal.

Wenn das Rücknahmesignal vorliegt, folgt ein weiterer Schritt:

e) Ausgeben eines zweiten Ansteuersignals an die Steuerventilanordnung, das eine Betätigung des Bremskraftverstärkers im Sinne eines Abbaus des Bremsdrucks auf einen normalen Bremsdruck bewirkt.

Dies bedeutet, daß der Bremskraftverstärker auf seine Normalbetriebskennlinie zurückgeführt wird und der Bremsdruck entsprechend abgebaut wird.

Um die Erweiterung der Bremsanlage für eine Geschwindigkeitsregelung oder eine z.B. eine Sicherheitsabstandsregelung zu realisieren, wird das Verfahren um folgenden Schritt erweitert:

f) Erzeugen eines von einer Betätigung des Bremspedals unabhängigen Auslösesignals für die elektronische Steuereinrichtung, die in Abhängigkeit von dem Auslösesignal ein Signal erzeugt, das eine Betätigung des Bremskraftverstärkers bewirkt, die einen anderen, vorzugsweise größere als die momentane Verzögerung des Fahrzeugs hervorruft.

Das Auslösesignal kann eine zu erreichende Fahrzeugbeschleunigung bzw. -verzögerung sein, die Geschwindigkeit eines vorausfahrenden Fahrzeugs oder ein anderes Signal, das z.B. durch ein Abstandsradar erzeugt wird.

Durch die Erfassung des Arbeitskammerdrucks bzw. des Differenzdrucks zwischen der Arbeitskammer und der Umgebung oder der Unterdruckkammer kann bei Bremsanlagen, die keine Verzögerungswertvorgabe durch eine Steuerung oder ein die Pedalbetätigung wiedergebendes Signal erhalten, der Bremsdruck im Hauptbremszylinder in einem linearen Verhältnis zu dem Arbeitskammer(differenz)-Druck als Hilfsgröße verwendet werden, um z.B. den Bremsdruck zu ermitteln. Damit kann eine Anfahrhilfe oder ein Antischlupfregelsystem realisiert werden.

Unter Bezugnahme auf die Zeichnungen werden in der nachstehenden Beschreibung Ausgestaltungen der Erfindung mit weiteren Eigenschaften, Merkmalen und Vorteilen erläutert.

Fig. 1      zeigt einen erfindungsgemäßen Bremskraftverstärker mit einem Drucksensor in einer schematischen Schnittdarstellung, wobei die elektronische Steuerungseinrichtung lediglich angedeutet ist.

Fig. 2      zeigt ein Flußdiagramm einer ersten Ausgestaltung des erfindungsgemäßen Verfahrens.

Fig. 3      zeigt ein Flußdiagramm einer zweiten Ausgestaltung des erfindungsgemäßen Verfahrens.

Fig. 4      zeigt eine schematisches Blockschaltbild einer erfindungsgemäßen Regelung in einer ersten Ausgestaltung.

Fig. 5      zeigt das Regelverhalten der erfindungsgemäßen Regelung gemäß Fig. 4.

Fig. 6      zeigt eine schematisches Blockschaltbild einer erfindungsgemäßen Regelung in einer zweiten Ausgestaltung.

Fig. 7      zeigt das Regelverhalten der erfindungsgemäßen Regelung gemäß Fig. 6.

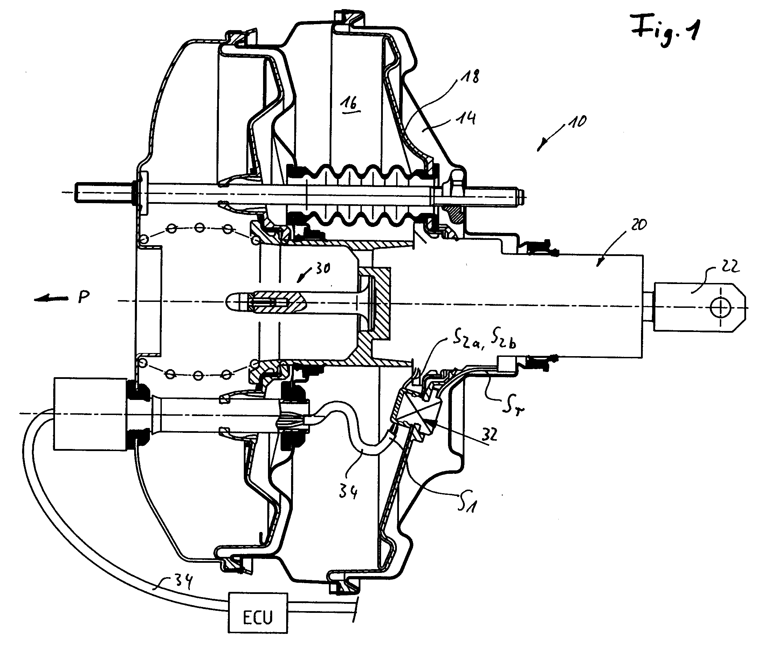

Fig. 1 zeigt einen mit 10 bezeichneten Bremskraftverstärker, der hier als Tandem-Bremskraftverstärker ausgeführt ist. Die Erfindung kann jedoch auch für Einfach-Bremskraftverstärker verwendet werden.

Der dargestellte Bremskraftverstärker 10 hat ein im wesentlichen rotationssymmetrisches Gehäuse 12, in dem eine (hintere) Arbeitskammer 14 sowie eine (vordere) Unterdruckkammer 16 angeordnet und durch eine bewegliche Wand 18 voneinander zu gemeinsamer Relativbewegung in Bezug auf das Gehäuse 12 verbunden ist. Auf das Ventil 20 wirkt das vordere Ende eines stangenförmigen Betätigungsgliedes 22, das im Einbauzustand mit einem (nicht gezeigten) Bremspedal des Kraftfahrzeuges verbunden ist.

Innerhalb des Bremskraftverstärkers ist ein Kraftabgabeglied 30 angeordnet, das sich an dem steuerbaren Ventil 20 abstützt. Das Kraftabgabeglied 30 ist zur Betätigung eines nicht veranschaulichten Hauptbremszylinders vorgesehen.

In dem abgebildeten Ruhezustand, bei abgeschalteter Unterdruckquelle, herrscht in beiden Kammern 14 und 16 Atmosphärendruck. Bei eingeschalteter Unterdruckquelle, also beispielsweise bei laufendem Motor, mit dessen Ansaugrohr die Unterdruckkammer 16 verbunden ist, entsteht in der Unterdruckkammer 16 ein Unterdruck, so daß die bewegliche Wand 18, und mit ihr das Ventil 20, geringfügig nach vorne verschoben wird, wodurch sich ein erneutes Druckgleichgewicht zwischen den beiden Kammern 14 und 16 einstellt. Von dieser Bereitschaftsstellung aus ist eine verlustwegfreie Betätigung des Bremskraftverstärkers 10 gewährleistet.

Bei einer normalen Bremsbetätigung durch den Fahrer arbeitet der Bremskraftverstärker in üblicher Weise, indem die Verbindung zwischen den beiden Kammern 14 und 16 über das steuerbare Ventil 20 unterbrochen wird und Umgebungsluft in die Arbeitskammer 14 strömt. Infolgedessen steht nun eine durch den Bremskraftverstärker verstärkte Betätigungskraft am Kraftabgabeglied 30 zur Verfügung.

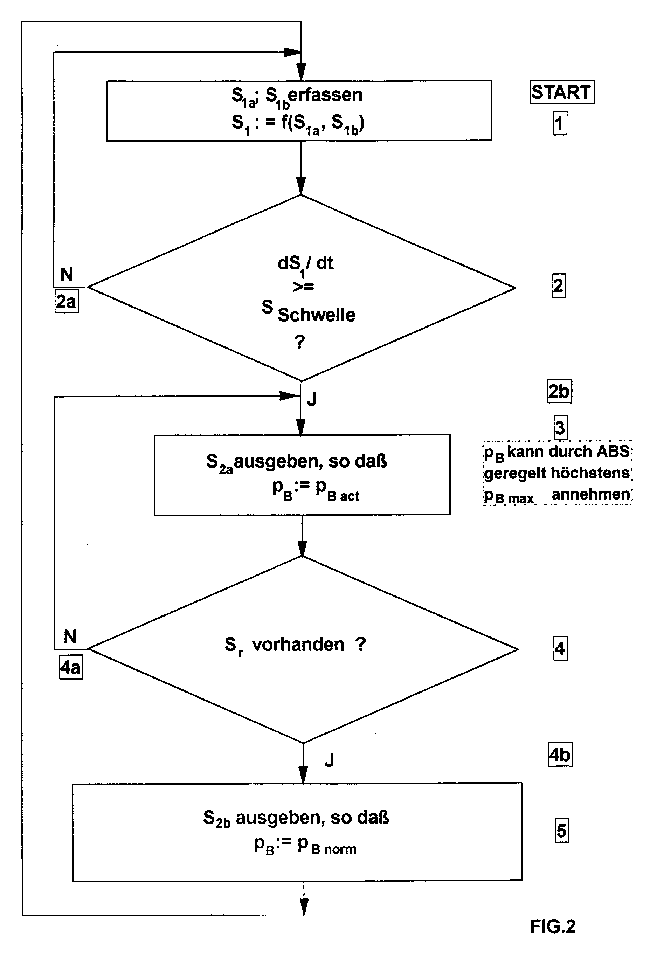

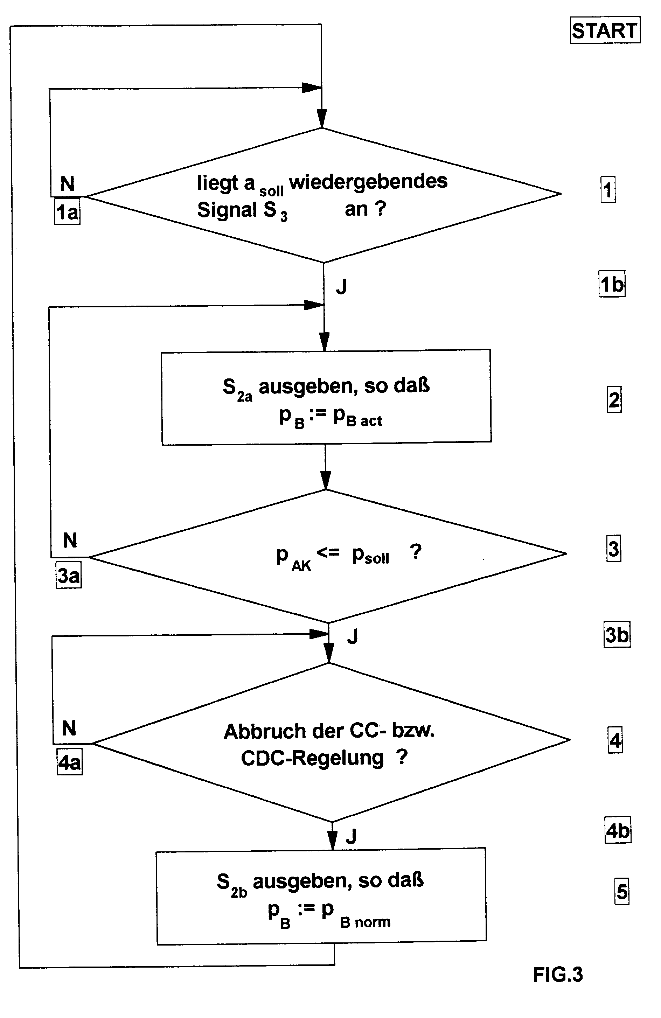

In der beweglichen Wand 18 ist ein Drucksensor 32 angeordnet, der den Druck in der Arbeitskammer mißt und das den Druck(-verlauf) wiedergebende Signal $S_1$ über eine Leitung 34 aus dem Gehäuse des Bremskraftverstärkers 10 heraus an eine elektronische Steuereinheit ECU leitet. Die elektronische Steuereinheit ECU ist über eine nicht weiter veranschaulichte Leitung mit einem Elektromagneten der Steuerventilanordnung 20 verbunden, so daß von der elektronischen Steuereinheit ECU gesteuert, die Steuerventilanordnung 20 betätigt werden kann, so daß die Steuerventilanordnung 20 öffnet, um Luft in die Arbeitskammer 14 einströmen zu lasen oder schließt, um die Arbeitskammer 14 von der Umgebungsatmosphäre abzutrennen. Die Erregung bzw. Entregung des Elektromagneten der Steuerventilanordnung 20 erfolgt dabei in Abhängigkeit von dem den Druck in der Arbeitskammer 14 wiedergebenden Signal, das auf unterschiedliche Weise verarbeitet werden kann, wie in den Fig. 2 und 3 veranschaulicht ist.

In Fig. 2 wird davon ausgegangen, daß nicht nur der Druck in der Arbeitskammer 14, sondern auch der Druck in der Unterdruckkammer 16 gemessen und jeweils diese Druckverläufe wiedergebende Signale $S_{1a}$, $S_{1b}$ an die elektronische Steuereinheit ECU über die Leitung 34 in Fig. 1 geführt werden. In der elektronischen Steuereinheit ECU wird daraus ein gemeinsames Signal $S_1$ beispielsweise durch Differenzbildung ($S_1 := S_{1a} - S_{1b}$) erzeugt (Schritt 1 in Fig. 2).

Dieses gemeinsame Signal wird nach der Zeit abgeleitet (differenziert) und mit einem Schwellwert $S_{Schwelle}$ verglichen (Schritt 2 in Fig. 2). Wenn das Ableitungssignal (dS1/dt) kleiner als der Schwellwert $S_{Schwelle}$ ist, wird an den Start zurückverzweigt (Schritt 2a in Fig. 2). Falls das Ableitungssignal (dS1/dt) größer oder gleich als der Schwellwert $S_{Schwelle}$ ist, wird zu dem Schritt 3 in Fig. 3 verzweigt (Schritt 2b in Fig. 2). Der Schwellwert $S_{Schwelle}$ kann dabei entweder konstant sein, oder von weiteren Umgebungsparametern wie z.B. der Fahrzeuggeschwindigkeit oder dergl. abhängig verändert werden. Außerdem kann auch ein charakteristischer Verlauf des Drucks (z.B. Peak, Flanke oder dergl.) in der Arbeitskammer oder der Druckanstiegsgeschwindigkeit vorbestimmt und mit der auftretenden entsprechenden Meßgröße verglichen werden.

Im Schritt 3 in Fig. 2 wird von der elektronischen Steuerungseinheit ECU an den Elektromagneten der Steuerventilanordnung 20 ein Signal $S_{2a}$ ausgegeben, das ein Betätigen der Steuerventilanordnung 20 bewirkt, so daß Luft in die Arbeitskammer 14 einströmt und eine unterstützte (Not-) Bremsung ausgelöst wird. Dabei wird der Bremsdruck $p_B$ in dem Hydrauliksystem auf einen erhöhten Druckwert $p_{Bact}$ angehoben, so daß eine verstärkte Bremsbetätigung erfolgt. Ein Blockieren der Räder des Fahrzeuges kann dabei nicht auftreten, da die ABS-Regelung dafür sorgt, daß ein maximaler Bremsdruck $p_{Bmax}$ nicht überschritten wird.

Eine Überprüfung, ob der Fahrer die Not- oder Zielbremsung abbrechen möchte, erfolgt in Schritt 4 von Fig. 2. Dort wird überprüft, ob ein Rücknahmesignal $S_r$ vorhanden ist, das durch einen Schalter in der Steuerventilanordnung 20 erzeugt wird. Ausgestaltungen udn Einzelheiten dieses Schalters sind in der vorangemeldeten nachveröffentlichten Anmeldung P 44 00 688.8 in den unterschiedlichsten Ausgestaltungen beschrieben. Dieser Schalter erkennt ein Abheben des Fußes des Fahrers vom Bremspedal und gibt ein entsprechendes Signal $S_r$ ab. Falls dieses Signal nicht $S_r$ vorhanden ist, der Fahrer die Bremsung also nicht abbrechen möchte, erfolgt eine Verzweigung des Programmverlaufs an den Beginn des Schrittes 3 in Fig. 2 (Schritt 4a in Fig. 2).

Falls das Signal $S_r$ vorhanden ist, der Fahrer die Bremsung also abbrechen möchte, (Schritt 4b in Fig. 2) wird gemäß Schritt 5 in Fig. 2 von der elektronischen Steuereinrichtung ECU das Signal $S_{2b}$ an den Elektromagneten der Steuerventilanordnung 20 ausgegeben. Dies hat zur Folge, daß der Elektromagnet entregt wird oder in die andere Richtung umgepolt wird, so daß die Steuerventilanordnung 20 die Luftzufuhr in die Arbeitskammer 14 unterbricht, wodurch der Bremsdruck $p_B$ auf den normalen Bremsdruck $p_{Bnorm}$ in dem Hydrauliksystem der Bremsanlage zurückfällt.

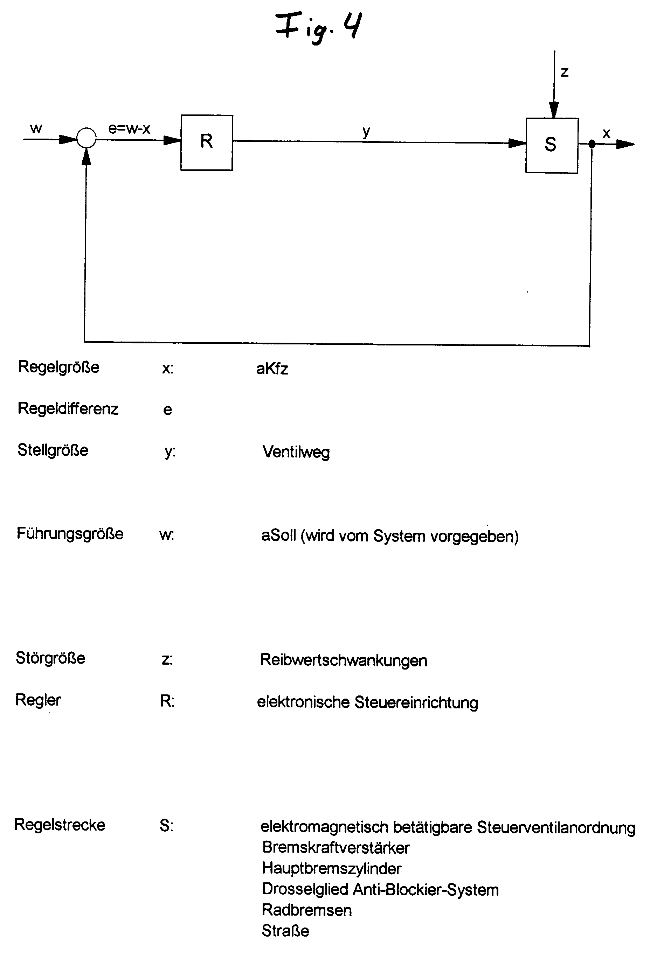

Fig. 4 zeigt schematisch die Regeleinrichtung, um ausgehend von einem vorgegebenen Fahrzeug-Sollverzögerungswert $a_{Soll}$ mit Hilfe der vorstehend beschriebenen Anordnung bzw. Vorgehensweise das Fahrzeug zu verzögern, um so beispielsweise ein Auffahren des Fahrzeuges auf ein Hindernis zu vermeiden.

Da bei dieser Regelanordnung die Regelstrecke sehr lang ist und eine Reihe von Totzeiten enthält, ist die Stabilität und die Regeldynamik der Gesamtanordnung nicht optimal.

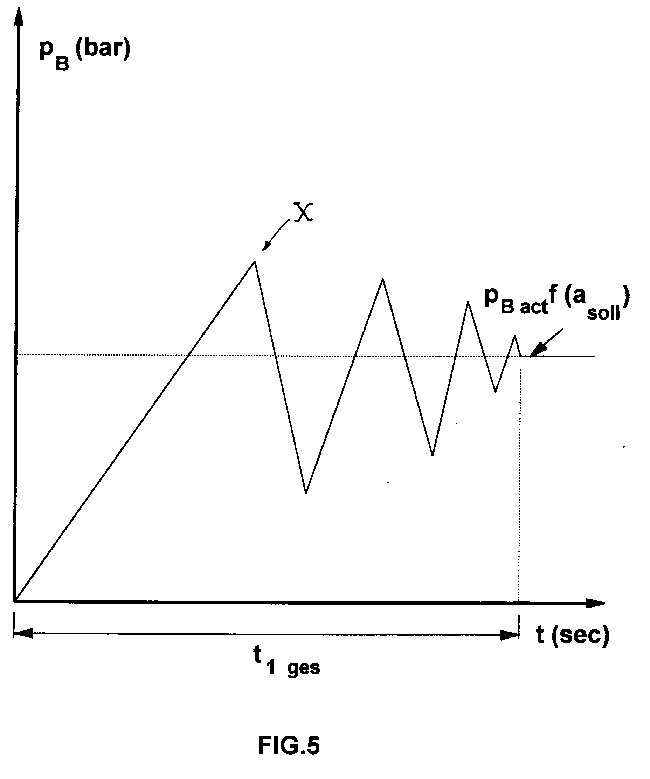

Dies ergibt sich auch aus dem Diagramm in Fig. 5, bei dem die Einschwenkzeit $t_{1ges}$ verstreicht, bis sich der Bremsdruck $p_{Bact}$ auf dem für eine bestimmte Fahrzeugverzögerung $a_{Soll}$ notwendigen Wert eingeschwungen hat.

Zu Beginn eines Regelzyklus wird die elektromagnetisch betätigbare Steuerventilanordnung 20 durch die elektronische Steuereinrichtung ECU betätigt, so daß die Arbeitskammer 14 des Bremskraftverstärkers 10 belüftet wird. Damit baut sich eine Druckdifferenz zwischen der Arbeitskammer 14 und der Unterdruckkammer 16 auf.

Diese Druckdifferenz bewirkt eine Verschiebung der beweglichen Wand 18 im Sinne einer Verringerung des Volumens der Unterdruckkammer 16, so daß das Kraftabgabeglied 30 in Richtung des Pfeils P (siehe Fig. 1) bewegt wird. Dies hat zur Folge, daß die Bremsen des Fahrzeugs betätigt werden und das Fahrzeug somit verzögert wird. Diese Verzögerung kann durch Sensoren an den Fahrzeugrädern erfaßt werden und an die elektronische Regeleinrichtung gemeldet werden.

Aufgrund der relativ langen Totzeiten der Gesamtanordnung zwischen der Betätigung der elektromagnetischen betätigbaren Steuerventilanordnung und der Rückmeldung der Fahrzeugverzögerung an die elektronische Steuereinrichtung ECU hat die abgebaute Druckdifferenz den der gewünschten Fahrzeugverzögerung entsprechenden Sollwert längst überschritten (siehe erster Überschwinger X in Fig. 5).

Dieses (hinsichtlich dem Amplitude) abnehmende Über- und Unterschreiten des jeweiligen Bremsdrucks setzt sich solange fort, bis die tatsächliche Fahrzeugverzögerung sich dem Sollwert $a_{Soll}$ angenähert hat. Der verstrichene Zeitraum $t_{1ges}$ ist dabei die Gesamtreaktionszeit des Regelsystems.

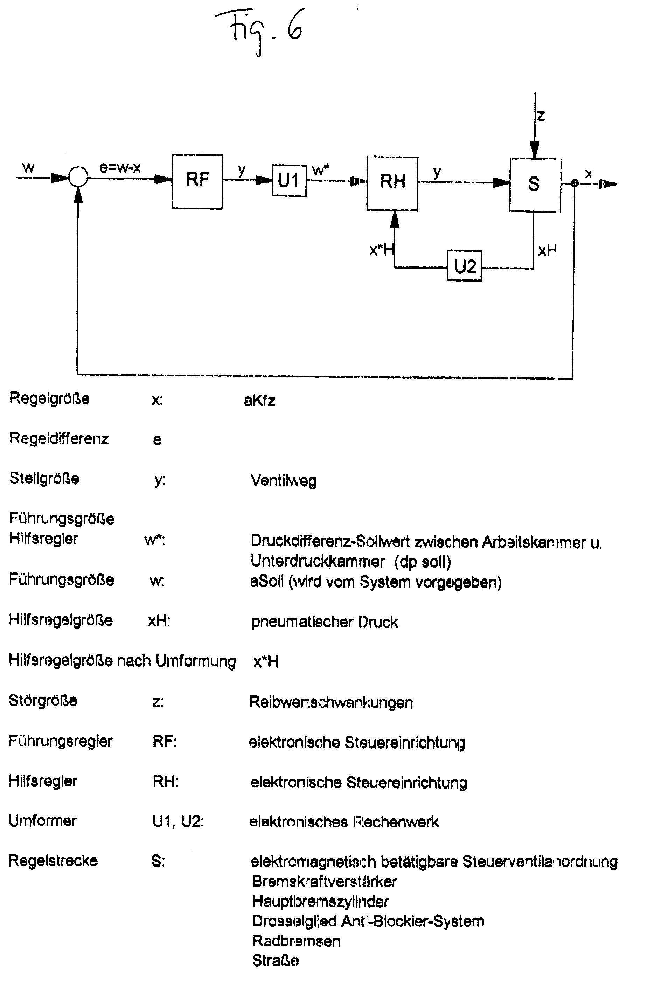

Um diese relativ lange Gesamtregelzeit zu verringern, wird gemäß der Erfindung die in Fig. 6 gezeigte Kaskadenregelung vorgeschlagen, bei der ein innerer Regelkreis (RH, S, U2) die Regelung der Druckdifferenz zwischen der Arbeitskammer und der Unterdruckkammer ausführt, während der außen liegende Regelkreis eine vom System vorgegebene Sollverzögerung des Fahrzeugs ($a_{Soll}$) in der Weise in eine Fahrzeug-Istverzögerung $a_{Kfz}$ umsetzt, daß beim Auftreten eines Sollverzögerungssignals ein entsprechender Differenzdruck oder Drucksollwert als Führungsgröße für den Hilfsregler erzeugt wird. Dies kann beispielsweise durch Auswahl aus einem in der elektronischen Steuereinrichtung ECU abgespeicherten Kennfeld erfolgen, wodurch eine elektromagnetische Betätigung der Steuerventilanordnung erfolgt, so daß sich der Differenzdruck zwischen der Arbeitskammer und der Unterdruckkammer bzw. der Druck in der Arbeitskammer entsprechend dem Sollwert einstellt. Dieser ermittelte Differenzdruck-Sollwert $dp_{soll}$ stellt einen durchschnittlichen Druckwert dar, der in der Lage ist, die geforderte Verzögerung des Fahrzeuges angenähert zu erreichen. Die genaue Anpassung an den Verzögerungssollwert erfolgt durch die Gesamtregelung.

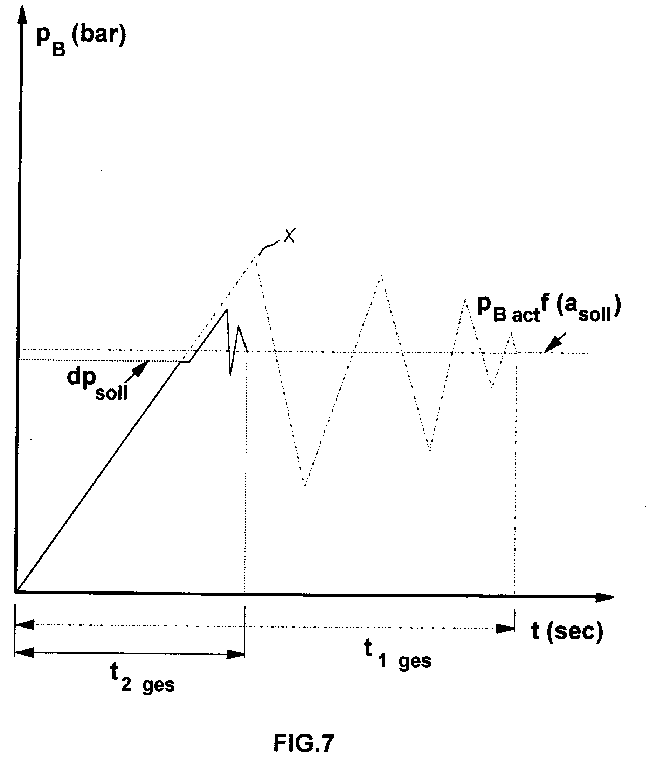

Fig. 7 veranschaulicht das Zeitverhalten dieser in Fig. 6 veranschaulichten Kaskadenregelung. Ersichtlich ist die sehr viel kürzere Zeit $t_{2ges}$ erforderlich, um den für die Fahrzeugsollverzögerung $a_{Soll}$ notwendigen Bremsdruck zu erreichen. Bei Beginn des Regelzyklus wird die Druckdifferenz relativ schnell der Führungsgröße $dp_{soll}$ angenähert, bevor das System den Bezug zur Führungsgröße $a_{Soll}$ einregelt.

**Patentansprüche**

1. Elektronisch gesteuerter Bremskraftverstärker für eine Straßenfahrzeugbremsanlage, mit

   - einem Gehäuse, das eine Unterdruckkammer (14) und eine von der Unterdruckkammer (14) durch eine bewegliche Wand (18) getrennte Arbeitskammer (16) aufweist,
   - einer elektromagnetisch betätigbaren Steuerventilanordnung (20), die mit der beweglichen Wand (18) zu gemeinsamer Relativbewegung gegenüber dem Gehäuse des Bremskraftverstärkers verbunden ist, und
   - einem Sensor (32), der für eine elektronische Steuereinrichtung (ECU) Betriebszustände der Straßenfahrzeugbremsanlage erfaßt und für diese Betriebszustände charakteristische Signale erzeugt, die die Steuereinrichtung (ECU) zur Erzeugung von Ansteuersignalen ($S_{1a}$, $S_{1b}$) für die Steuerventilanordnung (20) auswertet,
   dadurch gekennzeichnet, daß
   - der Sensor als Drucksensor (32) ausgestaltet ist und zumindest den in der Arbeitskammer (16) herrschenden Druck ($p_{AK}$) erfaßt.

2. Elektronisch gesteuerter Bremskraftverstärker nach Anspruch 1, dadurch gekennzeichnet, daß

   - der Drucksensor (32) an oder in einer ortsfesten Wand des Gehäuses des Bremskraftverstärkers angeordnet ist.

3. Elektronisch gesteuerter Bremskraftverstärker nach Anspruch 1, dadurch gekennzeichnet, daß

   - der Drucksensor (32) an oder in der beweglichen Wand (18) angeordnet ist.

4. Elektronisch gesteuerter Bremskraftverstärker nach dem vorhergehenden Anspruch, dadurch gekennzeichnet, daß

   - der Drucksensor (32) die Druckdifferenz (dp) zwischen dem in der Unterdruckkammer (14) herrschenden Druck ($p_{UK}$) und dem in der Arbeitskammer (16) herrschenden Druck ($p_{AK}$) erfaßt und ein für diese Druckdifferenz (dp) charakte-ristisches Signal für die Steuereinrichtung (ECU) erzeugt.

5.  Elektronisch gesteuerter Bremskraftverstärker nach Anspruch 2, dadurch gekennzeichnet, daß

    -   der Drucksensor (32) die Druckdifferenz (dp) zwischen dem in der Umgebungsatmosphäre des Bremskraftverstärkers (10) herrschenden Druck ($p_{Um}$) und dem in der Arbeitskammer (16) herrschenden Druck ($p_{AK}$) erfaßt und ein für diese Druckdifferenz (dp) charakteristisches Signal für die Steuereinrichtung (ECU) erzeugt.

6.  Elektronisch gesteuerter Bremskraftverstärker nach Anspruch 1, dadurch gekennzeichnet, daß

    -   ein zweiter Drucksensor außerhalb des Gehäuses des Bremskraftverstärkers (10) oder in der Unterdruckkammer (14) angeordnet ist, der den in der Umgebungsatmosphäre des Bremskraftverstärkers (10) herrschenden Druck ($p_{Um}$) bzw. den in der Unterdruckkammer (14) herrschenden Druck ($p_{UK}$) erfaßt und ein für diesen Druck ($p_{Um}$, $p_{UK}$) charakteristisches Signal für die Steuereinrichtung (ECU) erzeugt.

7.  Verfahren zum Betrieb einer Fahrzeugbremsanlage mit einem elektronisch gesteuerten Bremskraftverstärker nach einem der vorhergehenden Ansprüche, gekennzeichnet durch folgende Schritte:

    a) Erfassen des in der Arbeitskammer (16) des Bremskraftverstärkers herrschenden Druckes ($p_{AK}$),
    b) Erzeugen eines für den Druck ($p_{AK}$, dp) in der Arbeitskammer (16) charakteristischen Signals, und
    c) Auswerten des Signals ($S_1$), um ein Ansteu-ersignal (S2) für eine elektromagnetisch betätigbare Steuerventilanordnung (20) des Bremskraftverstärkers (10) zu erzeugen, und
    d) Ausgeben eines Ansteuersignals (S2a,S2b) an die mit der beweglichen Wand (18) zu gemeinsamer Relativbewegung gegenüber dem Gehause des Bremskraftverstärkers verbundene Steuerventilanordnung (20), das eine Betätigung des Bremskraftverstärkers (10) im Sinne eines Aufbaus oder eines Abbaus eines Bremsdrucks ($p_B$) bewirkt.

8.  Verfahren zum Betrieb einer Fahrzeugbremsanlage nach Anspruch 7, dadurch gekennzeichnet, daß der Schritt c) des weiteren folgendes umfaßt:

    c1) Verknüpfen des für den in der Arbeitskammer (14) herrschenden Druck ($p_{AK}$) charakteri-stischen Signals ($S_{1a}$) mit einem für den in der Umgebungsatmosphäre des Bremskraftverstärkers (10) herrschenden Druck ($p_{Um}$) oder den in einer Unterdruckkammer () des Bremskraft verstärkers (10) herrschenden Druck ($p_{UK}$) charakteristischen Signals ($S_{1b}$) zu einem gemeinsamen Signal ($S_1$).

9.  Verfahren zum Betrieb einer Fahrzeugbremsanlage nach Anspruch 7 oder 8, dadurch gekennzeichnet, daß der Schritt c) des weiteren folgendes umfaßt:

    c2) Ableiten des Signals (S1) nach der Zeit, um ein Ableitungs-Signal (dS1/dt) zu erhalten.

10. Verfahren zum Betrieb einer Fahrzeugbremsanlage nach dem vorherigen Anspruch, dadurch gekennzeichnet, daß der Schritt c) des weiteren folgendes umfaßt:

    c3) Vergleichen des Ableitungs-Signals (dS1/dt) mit einem vorbestimmten Schwellwert ($S_{schwelle}$).

11. Verfahren zum Betrieb einer Fahrzeugbremsanlage nach dem vorherigen Anspruch, dadurch gekennzeichnet, daß der Schritt c) des weiteren folgendes umfaßt:

    c4) Erzeugen eines ersten Ansteuersignals (S2a) falls das Ableitungs-Signal (dS1/dt) größer oder gleich dem Schwellwert ($S_{schwelle}$) ist, wobei das erste Ansteuersignal (S2a) so bemessen ist, daß es eine Betätigung des Bremskraftverstärkers (10) bewirkt, die einen anderen, vorzugsweise größeren Bremsdruck ($p_{Bact}$) hervorruft, als er sich aus der momentanen Stellung eines mit dem Bremskraftverstärker (10) verbundenen Bremspedals ergäbe.

12. Verfahren zum Betrieb einer Fahrzeugbremsanlage nach dem vorherigen Anspruch, dadurch gekennzeichnet, daß

    -   das erste Ansteuersignal (S2a) so bemessen ist, daß es einen maximal möglichen Bremsdruck ($p_{Bmax}$) hervorruft.

13. Verfahren zum Betrieb einer Fahrzeugbremsanlage nach einem der Ansprüche 7 bis 12, dadurch gekennzeichnet, daß der Schritt c) des weiteren folgendes umfaßt:

c5) Erfassen einer Betätigungsstellung des Bremspedals, und

c6) Erzeugen eines eine Rücknahme des Bremspedals um einen vorbestimmten Betätigungsweg wiedergebendes Rücknahmesignal ($S_r$).

14. Verfahren zum Betrieb einer Fahrzeugbremsanlage nach dem vorhergehenden Anspruch, gekennzeichnet durch den weiteren Schritt:

e) Ausgeben eines zweiten Ansteuersignals (S2b) an die Steuerventilanordnung (20), das eine Betätigung des Bremskraftverstärkers (10) im Sinne eines Abbaus des Bremsdrucks ($p_B$) auf einen normalen Bremsdruck ($p_{Bnorm}$) bewirkt, wenn das Rücknahmesignal ($S_r$) vorliegt.

15. Verfahren zum Betrieb einer Fahrzeugbremsanlage nach einem der vorhergehenden Verfahrensansprüche, gekennzeichnet durch den weiteren Schritt:

f) Erzeugen eines von einer Betätigung des Bremspedals unabhängigen Auslösesignals ($a_{soll}$) für die elektronische Steuereinrichtung (ECU), die in Abhängigkeit von dem Auslösesignal ($a_{soll}$) ein Signal (S3) erzeugt, das eine Betätigung des Bremskraftverstärkers (10) bewirkt, die einen andere, vorzugsweise größere als die momentane Verzögerung des Fahrzeugs hervorruft.

## Claims

1. Electronically controlled brake booster for a road vehicle brake system, comprising

   - a housing having a vacuum chamber (14) and a servo chamber (16) separated from said vacuum chamber (14) by a movable wall (18),

   - an electromagnetically operatable control valve device (20), which is coupled to said movable wall (18) for common relative movement with respect to said housing of said brake booster, and

   - a sensor (32) sensing operating conditions of the road vehicle brake system for an electronic control device (ECU) and producing signals which are characteristic for said operating conditions, which signals are evaluated by said control device (ECU) for producing drive signals ($S_{1a}$, $S_{1b}$) for said control valve device (20) characterized in that

   - said sensor is formed as a pressure sensor (32) and senses at least the pressure ($P_{AK}$) prevailing in said servo chamber (16).

2. Electronically controlled brake booster according to claim 1, characterized in that

   - the pressure sensor (32) is arranged at or in a filed wall of said housing of said brake booster.

3. Electronically controlled brake booster according to claim 1, characterized in that

   - the pressure sensor (32) is arranged at or in said movable wall (18).

4. Electronically controlled brake booster according to the preceeding claim, characterized in that

   - said pressure sensor (32) senses the pressure difference (dp) between the pressure ($p_{UK}$) prevailing in said vacuum chamber (14) and the pressure ($p_{AK}$) prevailing in said servo chamber (16) and produces a signal for said control device (ECU) which is characteristic for this pressure difference (dp).

5. Electronically controlled brake booster according to claim 2, characterized in that

   - the pressure sensor (32) senses the pressure difference (dp) between the pressure ($p_{Um}$) prevailing in the surrounding atmosphere of the brake booster (10) and the pressure ($p_{AK}$) prevailing in said servo chamber (16) and produces a signal for said control device (ECU) which is characteristic for this pressure difference (dp).

6. Electronically controlled brake booster according to claim 1, characterized in that

   - outside said housing of said brake booster (10) or in said vacuum chamber (14) a second pressure sensor is arranged which senses the pressure ($p_{Um}$) prevailing in the surrounding atmosphere of said brake booster (10) or the pressure ($p_{UK}$) prevailing in said vacuum chamber (14), respectively, and produces a signal for said control device (ECU) which is characteristic for this pressure ($p_{Um}$, $p_{UK}$).

7. Method of operation of a vehicle brake system having an electronically controlled brake booster according to one of the preceeding claims, characterized by the following steps:

   a) sensing the pressure ($p_{AK}$) prevailing in the servo chamber of said brake booster,

b) producing a signal which is characteristic for the pressure ($p_{AK}$, dp) in said servo chamber, and

c) evaluating the signal ($S_1$) in order to produce a drive signal ($S_2$) for an electromagnetically operatable control valve device (20) of said brake booster (10) and

d) outputting a drive signal ($S_{2a}$, $S_{2b}$) to said control valve device (2) which causes an operation of said brake booster (1) in the sense of building up or reducing a brake pressure ($p_B$), said control device (20) being connected with the movable wall (18) for common relative movement with respect to the housing of the brake booster.

8. Method of operation of a vehicle brake system according to claim 7, characterized in that step c) further comprises the following:

c1) linking the signal ($S_{1a}$) characteristic for the pressure ($p_{AK}$) prevailing in said servo chamber (14) with a signal ($S_{1b}$) characteristic for the pressure ($p_{Um}$) prevailing in the surrounding atmosphere of the brake booster (10) or the pressure ($p_{UK}$) prevailing in a vacuum chamber () of said brake booster (10) to a common signal ($S_1$).

9. Method of operation of a vehicle brake system according to claim 7 or 8, characterized in that step c) further comprises the following:

c2) differentiating the signal ($S_1$) with respect to the time in order to obtain a differentiation signal (dS1/dt).

10. Method of operation of a vehicle brake system according to the preceeding claim, characterized in that step c) further comprises the following:

c3) comparing the differentiation signal (dS1/dt) with a predetermined threshold value ($S_{threshold}$).

11. Method of operation of a vehicle brake system according to the preceeding claim, characterized in that step c) further comprises the following:

c4) producing a first drive signal ($S_{2a}$) in case said differentiation signal (dS1/dt) is larger than or equal to said threshold value ($S_{threshold}$), wherein said first drive signal ($S_{2a}$) is dimensioned such that it causes an operation of said brake booster (10) which causes a different, preferably larger brake pressure ($p_{Bact}$) as compared with a brake pressure which would result from the momentary position of a brake pedal connected to said brake booster (10).

12. Method of operation of a vehicle brake system according to the preceeding claim, characterized in that

- said first drive signal ($S_{2a}$) is dimensioned such that it causes a maximally possible brake pressure ($p_{Bmax}$).

13. Method of operation of a vehicle brake system according to one of the claims 7 to 12, characterized in that step c) further comprises the following:

c5) sensing an operative position of the brake pedal and

c6) producing a reset signal ($S_r$) representing a reset of the brake pedal for a predetermined pedal travel.

14. Method of operation of a vehicle brake system according to the preceeding claim, characterized by the further step:

e) outputting a second drive signal ($S_{2b}$) to said control valve device (20) which causes an operation of said brake booster (10) in the sense of reduction of said brake pressure ($p_B$) to a normal brake pressure ($p_{Bnorm}$) when said reset signal ($S_r$) is present.

15. Method of operation of a vehicle brake system according to one of the preceding method claims, characterized by the further step:

f) producing a trigger signal ($a_{soll}$) being independent of an operation of said brake pedal for said electronic control device (ECU) which depending on said trigger signal ($a_{soll}$) produces a signal (S3) which causes an operation of said brake booster (10) which causes a different, preferably larger momentary deceleration of the vehicle.

**Revendications**

1. Servofrein commandé électroniquement pour un système de freinage de véhicule routier, comprenant

- un boitier qui présente une chambre de dépression (14) et une chambre de travail (16) séparée de la chambre de dépression (14) par une paroi mobile (18),

- un système de distribution et de régulation (20) pouvant être actionné électromagnétiquement qui est relié à la paroi-mobile (18) pour se déplacer avec celle-ci relativement au boîtier du servofrein, et

- un capteur (32) qui relève des états de fonctionnement du système de freinage du véhicule routier pour une unité de commande électronique (ECU) et génère des signaux caractéristiques de ces états de fonctionnement que l'unité de commande (ECU) exploite pour générer des signaux de commande ($S_{1a}$ , $S_{1b}$) pour le système de distribution et de régulation (20),

  caractérisé en ce que

- le capteur est un capteur de pression (32) et relève au moins la pression ($p_{AK}$) régnant dans la chambre de travail (16).

2. Servofrein commandé électroniquement selon la revendication 1, caractérisé en ce que

  - le capteur de pression (32) est disposé contre ou dans une paroi fixe du boîtier du servofrein.

3. Servofrein commandé électroniquement selon la revendication 1, caractérisé en ce que

  - le capteur de pression (32) est disposé contre ou dans la paroi mobile (18).

4. Servofrein commandé électroniquement selon l'une quelconque des revendications précédentes, caractérisé en ce que

  - le capteur de pression (32) relève la différence de pression (dp) entre la pression ($p_{UK}$) régnant dans la chambre de dépression (14) et la pression ($p_{AK}$) régnant dans la chambre de travail (16) et génère un signal caractéristique de cette différence de pression (dp) pour l'unité de commande (ECU).

5. Servofrein commandé électroniquement selon la revendication 2, caractérisé en ce que

  - le capteur de pression (32) relève la différence de pression (dp) entre la pression ($p_{Um}$) régnant dans l'atmosphère environnant le servofrein (10) et la pression ($p_{AK}$) régnant dans la chambre de travail (16) et génère un signal caractéristique de cette différence de pression (dp) pour l'unité de commande (ECU).

6. Servofrein commandé électroniquement selon la revendication 1, caractérisé en ce que

- un deuxième capteur de pression est disposé à l'extérieur du boitier du servofrein (10) ou dans la chambre de dépression (14), qui relève la pression ($p_{Um}$) régnant dans l'atmosphère environnant le servofrein (10) respectivement la pression ($p_{UK}$) régnant dans la chambre de dépression (14) et génère un signal caractéristique de cette pression ($p_{Um}$, $P_{UK}$) pour l'unité de commande (ECU).

7. Procédé de fonctionnement d'un système de freinage comprenant un servofrein commandé électroniquement selon l'une quelconque des revendications précédentes, caractérisé par les opérations suivantes consistant à :

  a) relever la pression ($p_{AK}$) régnant dans la chambre de travail (16) du servofrein,
  b) générer un signal caractéristique de la pression ($p_{AK}$, dp) régnant dans la chambre de travail (16), et
  c) évaluer le signal ($S_1$) pour générer un signal de commande (S2) pour un système de distribution et de régulation pouvant être actionné électromagnétiquement (20) du servofrein (10), et
  d) émettre un signal de commande (S2a, S2b) au système de distribution et de régulation (20) relié à la paroi mobile (18) pour se déplacer avec celle-ci relativement au boîtier du servofrein qui engendre un actionnement du servofrein (10) dans le sens d'une augmentation ou d'un abaissement d'une pression de freinage ($p_B$).

8. Procédé de fonctionnement d'un système de freinage de véhicule selon la revendication 7, caractérisé en ce que l'opération c) consiste de plus à :

  c1) combiner le signal ($S_{1a}$) caractéristique de la pression ($p_{AK}$) régnant dans la chambre de travail (14) avec un signal ($S_{1b}$) caractéristique de la pression ($p_{Um}$) régnant dans l'atmosphère environnant le servofrein (10) ou de la pression ($p_{UK}$) régnant dans une chambre de dépression (14) du servofrein (10) en un signal commun ($S_1$).

9. Procédé de fonctionnement d'un système de freinage de véhicule selon la revendication 7 ou 8, caractérisé en ce que l'opération c) consiste de plus à :

  c2) dériver le signal (S1) par rapport au temps pour obtenir un signal de dérivée (dS1/dt).

10. Procédé de fonctionnement d'un système de freinage de véhicule selon la revendication précédente, caractérisé en ce que l'opération c) consiste de plus à :

c3) comparer le signal de dérivée (dS1/dt) à une valeur de seuil prédéterminée ($S_{schwelle}$).

11. Procédé de fonctionnement d'un système de freinage de véhicule selon la revendication précédente, caractérisé en ce que l'opération c) consiste de plus à :

c4) générer un premier signal de commande (S2a) dans le cas où le signal de dérivée (dS1/dt) est supérieur ou égal à la valeur de seuil ($S_{schwelle}$), le premier signal de commande (S2a) ayant une grandeur telle qu'il provoque un actionnement du servofrein (10) qui génère une autre pression de freinage ($p_{Bact}$), de préférence plus élevée, que celle qui résulterait de la position instantanée d'une pédale de frein reliée au servofrein (10).

12. Procédé de fonctionnement d'un système de freinage de véhicule selon la revendication précédente, caractérisé en ce que

- le premier signal de commande (S2a) a une grandeur telle qu'il fasse générer une pression de freinage la plus grande possible ($p_{Bmax}$).

13. Procédé de fonctionnement d'un système de freinage de véhicule selon l'une quelconque des revendications 7 à 12, caractérisé en ce que l'opération c) consiste de plus à :

c5) relever une position d'actionnement de la pédale de frein, et
c6) générer un signal de retrait ($S_r$) reproduisant un retrait de la pédale de frein d'une distance d'actionnement prédéterminée.

14. Procédé de fonctionnement d'un système de freinage de véhicule selon la revendication précédente, caractérisé par l'opération supplémentaire consistant à :

e) émettre un deuxième signal de commande (S2b) au système de distribution et de régulation (20) qui provoque un actionnement du servofrein (10) dans le sens d'un abaissement de la pression de freinage ($p_B$) à une pression de freinage normale ($p_{Bnorm}$) lorsque le signal de retrait ($S_r$) est présent.

15. Procédé de fonctionnement d'un système de freinage de véhicule selon l'une quelconque des revendications de procédé précédentes, caractérisé par l'opération supplémentaire consistant à :

f) générer un signal de déclenchement ($a_{soll}$) indépendant d'un actionnement de la pédale de frein destiné à l'unité de commande électronique (ECU) qui génère en fonction du signal de déclenchement ($a_{soll}$) un signal (S3) qui provoque un actionnement du servofrein (10) qui engendre une autre décélération du véhicule, de préférence supérieure à la décélération instantanée du véhicule.

Fig. 1

FIG.2

START
**1** $S_{1a}$; $S_{1b}$ erfassen
$S_1 := f(S_{1a}, S_{1b})$

**2** $dS_1 / dt \geq S_{Schwelle}$ ?

**2a** N

**2b** J

**3** $p_B$ kann durch ABS geregelt höchstens $p_{B\,max}$ annehmen

$S_{2a}$ ausgeben, so daß $p_B := p_{B\,act}$

**4** $S_r$ vorhanden ?

**4a** N

**4b** J

**5** $S_{2b}$ ausgeben, so daß $p_B := p_{B\,norm}$

FIG.3

## Fig. 4

| Regelgröße | x: | aKfz |
| --- | --- | --- |

| Regeldifferenz | e | |
| --- | --- | --- |

| Stellgröße | y: | Ventilweg |
| --- | --- | --- |

| Führungsgröße | w: | aSoll (wird vom System vorgegeben) |
| --- | --- | --- |

| Störgröße | z: | Reibwertschwankungen |
| --- | --- | --- |

| Regler | R: | elektronische Steuereinrichtung |
| --- | --- | --- |

| Regelstrecke | S: | elektromagnetisch betätigbare Steuerventilanordnung<br>Bremskraftverstärker<br>Hauptbremszylinder<br>Drosselglied Anti-Blockier-System<br>Radbremsen<br>Straße |
| --- | --- | --- |

FIG.5

Fig. 6

| | | |
|---|---|---|
| Regelgröße | x: | aKfz |
| Regeldifferenz | e | |
| Stellgröße | y: | Ventilweg |
| Führungsgröße Hilfsregler | w*: | Druckdifferenz-Sollwert zwischen Arbeitskammer u. Unterdruckkammer (dp soll) |
| Führungsgröße | w: | aSoll (wird vom System vorgegeben) |
| Hilfsregelgröße | xH: | pneumatischer Druck |
| Hilfsregelgröße nach Umformung | x*H | |
| Störgröße | z: | Reibwertschwankungen |
| Führungsregler | RF: | elektronische Steuereinrichtung |
| Hilfsregler | RH: | elektronische Steuereinrichtung |
| Umformer | U1, U2: | elektronisches Rechenwerk |
| Regelstrecke | S: | elektromagnetisch betätigbare Steuerventilanordnung Bremskraftverstärker Hauptbremszylinder Drosselglied Anti-Blockier-System Radbremsen Straße |

FIG.7